# EUROPEAN PATENT APPLICATION

(11) **EP 4 715 490 A2**
(43) Date of publication of application: **25.03.2026**
(21) Application number: 25201377.6
(22) Date of filing: 10.09.2025
(51) Int. Cl.: G05B 9/03, G05B 19/042, G05B 19/05

(54) **FLEXIBLE CONTROLLER ARCHITECTURE FOR HIGHER AVAILABILITY AND HIGHER SAFETY INTEGRITY**

(30) Priority: 23.09.2024 US 202418892762
(71) Applicant: Rockwell Automation Technologies, Inc., Mayfield Heights, OH 44124 (US)
(72) Inventor: Stay, Nicholas, Mayfield Heights, OH (US); Izzo, Joseph, Mayfield Heights, OH (US); Sorbello, Anthony, Mayfield Heights, OH (US)
(74) Representative: Grünecker Patent- und Rechtsanwälte PartG mbB

(57) **Abstract**

An industrial control system includes a first and a second safety program executing in tandem on a first and a second safety controller, respectively. A first and a second fault condition is detected with the first or the second safety program, respectively. A third fault condition is detected by either the first or second safety programs. Monitoring for the third fault condition by the first or second safety programs is disabled upon detecting the first or second fault condition, respectively. A safe operating state is entered when either the first or second safety program detects the third fault condition. The industrial control system operates at a first safety level while both the first and second safety programs monitor the industrial control system for the third fault condition and at a second safety level, lower than first safety level, when either the first or second fault condition is detected.

## Description

### BACKGROUND INFORMATION

The subject matter disclosed herein relates to a flexible architecture for an industrial controller permitting operation that achieves either higher availability or a higher safety integrity. More specifically, a safety controller may be arranged in multiple configurations to provide either safety operation at a first safety level, high availability operation, or safety operation at a higher safety level with temporary degradation to the first safety level.

As is known to those skilled in the art, industrial controllers are specialized electronic computer systems used for the control of industrial processes or machinery. An example industrial controller is a programmable logic controller (PLC) used in a factory environment. Industrial controllers differ from conventional computers in a number of ways. Physically, they are constructed to be substantially more robust against shock and damage and to better resist external contaminants and extreme environmental conditions. The processors and operating systems of industrial controllers are optimized for real-time control and execute languages allowing ready customization of programs to comport with a variety of different controller applications. Industrial controllers may have an operator interface for accessing, controlling, and/or monitoring the industrial controller. An example operator interface can include a locally connected terminal having a keyboard, mouse, and display.

One important application of industrial controllers is in "High Availability (HA) control." A HA control system attempts to maintain operation of the control system even in the event of a failure within the system. In order to maintain operation, a HA control system typically includes redundant subsystems such as redundant industrial controllers, redundant backplanes, redundant bridges, redundant adapters, redundant input/output (IO) modules, redundant motor drives, and/or redundant communication networks. Physical redundancy is provided in each subsystem such that if a single failure occurs in one of the elements in the subsystem, operation of the subsystem can continue via the redundant element(s). For example, if one of the redundant controllers fails, operation can continue using the other controller(s). Similarly, if a failure occurs on one network, backplane, bridge, adapter or IO module, the operation can continue via one or more redundant networks, backplanes, bridges, adapters, or IO modules.

During operation, a HA control system may utilize one component as an active component and the other component as a back-up component. The back-up component performs the same operations as the active component while disconnected from the control system such that the status of the backup-up component is identical to the status of the active component. However, actual control of the controlled system is performed by the active component. Upon failure of the active component, switches, for example, may disconnect the active component and connect the back-up component to maintain operation of the controlled system. A brief switchover time occurs as one component is disconnected and the other component is connected.

Another important application of industrial controllers is in "safety control". Safety control is used in applications where failure of an industrial controller can create a risk of injury to humans. While safety control is closely related to reliability, safety control places additional emphasis on ensuring correct operation even if it reduces equipment availability. Safety industrial control systems are not optimized for "availability," that is being able to function for long periods of time without error, but rather for "safety," which is being able to accurately detect error to shut down. Safety industrial controllers normally provide a predetermined safe state for their outputs upon a safety shutdown, the predetermined values of these outputs being intended to put the industrial process into its safest static mode. For that reason, safety controllers may provide run time diagnostic capabilities to detect incorrect operation and to move the control system to predefined "safety states" if a failure is detected. The safety states will depend on the particular process being implemented and will cause the actuators to assume a state predetermined to be safest when control correctness cannot be ensured. For example, upon detection of a failure, an actuator controlling cutting machinery might move that machinery to a stop state while an actuator providing air filtration might retain that machinery in an on state.

Safety control capability may be designated, for example, by "safety integrity levels" (SIL) defined under standard IEC 61508 and administered by the International Electrotechnical Commission (IEC) under rule hereby incorporated by reference. Standard IEC EN 61508 defines four SIL levels of SIL-1 to SIL-4 with higher numbers representing higher amounts of risk reduction. Obtaining a desired SIL rating requires a certain degree of diagnostic coverage for components within a system. The degree of diagnostic coverage is defined according to a percentage likelihood that a failure of a component within a system will be detected. Low diagnostic coverage, for example, may require only a sixty percent (60%) chance that a failure will be detected. In contrast, high diagnostic coverage, required for a SIL 3 rating, may require a ninety-nine percent (99%) chance that a failure will be detected. Mitigation of a risk occurring increases the SIL rating and may be achieved by detecting a failure in a system that may cause a dangerous operating environment before the dangerous operating environment can occur. Therefore, determination of a SIL rating is based, at least in part, on the ability of a system to detect a fault condition and enter a safe state in response to detecting the fault condition.

As may be observed by the descriptions of HA control and safety control, the two have differing objectives. HA control attempts to maintain operation of the control system even in the event of a failure. Safety control attempts to identify a failure in the control system and put the control system into a safe operating state upon detection of the failure. As a result of the differing objectives, industrial controllers have been independently designed to provide HA control or to provide safety control. Historically, a HA controller has not been suitable for use as a safety controller, and a safety controller has not been suitable for use as a HA controller.

An industrial control environment may include many types of control systems. Some control systems may require HA control while other control systems require safety control. Because of the specialized nature of HA controllers and safety controllers, it has been necessary to maintain an inventory of both HA controllers and safety controllers for scheduled maintenance and/or repair of failed controllers. The different controllers require additional storage space and result in additional cost to purchase and maintain spare inventory of each controller.

Thus, it would be desirable to provide a single controller suitable for use as either a HA controller or a safety controller.

### BRIEF DESCRIPTION

According to a first embodiment of the invention, a method of controlling an industrial control system includes executing a first control program and a first safety program on a first safety controller and executing a second control program and a second safety program on a second safety controller in tandem with the first safety controller executing the first control program and the first safety program. The first control program receives multiple input signals and generates multiple first output signals, and the first safety program monitors the industrial control system for a first fault condition. The second control program receives the input signals and generates multiple second output signals, where each of the second output signals corresponds to one of the first output signals, and the second safety program monitors the industrial control system for a second fault condition. The first output signals are transmitted from the first safety controller to at least one output module, and the second output signals are transmitted from the second safety controller to the at least one output module. Each output channel on the at least one output module is set either to one of the first output signals or to one of the second output signals. Each output channel corresponds to one of the first and second output signals, and each output channel is set only to one of the corresponding first and second output signals. The industrial control system operates at a first safety level while the first safety controller monitors the industrial control system for the first fault condition and the second safety controller monitors the industrial control system for the second fault condition.

According to another embodiment of the invention, a method of controlling an industrial control system includes executing a first safety program on a first safety controller, executing a second safety program on a second safety controller in tandem with the first safety controller executing the first safety program, detecting a first fault condition in the industrial control system with the first safety program executing on the first safety controller, detecting a second fault condition in the industrial control system with the second safety program executing on the second safety controller, detecting a third fault condition in the industrial control system with either the first safety program executing on the first safety controller or the second safety program executing on the second safety controller, disabling monitoring for the third fault condition by the first safety controller upon detecting the first fault condition, disabling monitoring for the third fault condition by the second safety controller upon detecting the second fault condition, entering a safe operating state for the industrial control system when either the first safety program or the second safety program detects the third fault condition, and operating at a first safety level while both the first safety controller and the second safety controller monitor the industrial control system for the third fault condition.

According to still another embodiment of the invention, a method of controlling an industrial control system includes executing a first safety program on a first safety controller, executing a second safety program on a second safety controller in tandem with the first safety controller executing the first safety program, detecting a first fault condition in the industrial control system with the first safety program executing on the first safety controller, detecting a second fault condition in the industrial control system with the second safety program executing on the second safety controller, detecting a third fault condition in the industrial control system with either the first safety program executing on the first safety controller or the second safety program executing on the second safety controller, disabling monitoring for the third fault condition by the first safety controller upon detecting the first fault condition, disabling monitoring for the third fault condition by the second safety controller upon detecting the second fault condition, entering a safe operating state for the industrial control system when either the first safety program or the second safety program detects the third fault condition, operating at a first safety level while both the first safety controller and the second safety controller monitor the industrial control system for the third fault condition, and operating at a second safety level when either the first or second fault condition is detected, where the second safety level is lower than the first safety level.

These and other advantages and features of the invention will become apparent to those skilled in the art from the detailed description and the accompanying drawings. It should be understood, however, that the detailed description and accompanying drawings, while indicating preferred embodiments of the present invention, are given by way of illustration and not of limitation. Many changes and modifications may be made within the scope of the present invention without departing from the spirit thereof, and the invention includes all such modifications.

### BRIEF DESCRIPTION OF THE DRAWINGS

Various exemplary embodiments of the subject matter disclosed herein are illustrated in the accompanying drawings in which like reference numerals represent like parts throughout, and in which:
FIG. 1 is a block diagram of an industrial control system according to one embodiment of the present invention;
FIG. 2 is a block diagram further representing aspects of the industrial control system of Fig. 1;
FIG. 3 is a block diagram representation of an exemplary prior art industrial control system;
FIG. 4 is a runtime data flow diagram representation of a prior art connection established in the industrial control system of Fig. 3;
FIG. 5 is a block diagram representing data paths in a concurrent connection between modules in the industrial control system of Fig. 1;
FIG. 6 is flow diagram illustrating message flow between modules for a concurrent connection open process in the industrial control system of Fig. 1;
FIG. 7 is a flow diagram illustrating message flow in a first direction for modules in the industrial control system of Fig. 1 during run time operation utilizing a concurrent connection according to one embodiment of the invention;
FIG. 8 is a flow diagram illustrating message flow in a second direction for modules in the industrial control system of Fig. 1 during run time operation utilizing a concurrent connection according to one embodiment of the invention, where the second direction is opposite the direction shown in Fig. 7;
FIG. 9 is a block diagram representation of an extended network segment format of a data message for use in a concurrent connection according to one embodiment of the invention;
FIG. 10 is a flow diagram illustrating steps for operating a pair of safety controllers as both safety controllers and high availability controllers according to one embodiment of the invention; and
FIG. 11 illustrates the industrial control system of Fig.1 incorporating two safety controllers.

In describing the various embodiments of the invention which are illustrated in the drawings, specific terminology will be resorted to for the sake of clarity. However, it is not intended that the invention be limited to the specific terms so selected and it is understood that each specific term includes all technical equivalents which operate in a similar manner to accomplish a similar purpose. For example, the word "connected," "attached," or terms similar thereto are often used. They are not limited to direct connection but include connection through other elements where such connection is recognized as being equivalent by those skilled in the art.

### DETAILED DESCRIPTION

The various features and advantageous details of the subject matter disclosed herein are explained more fully with reference to the non-limiting embodiments described in detail in the following description.

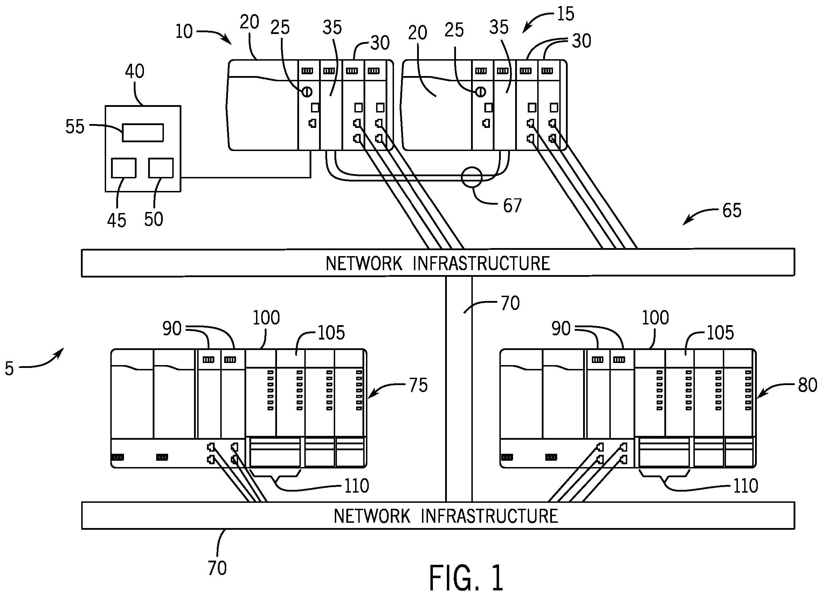

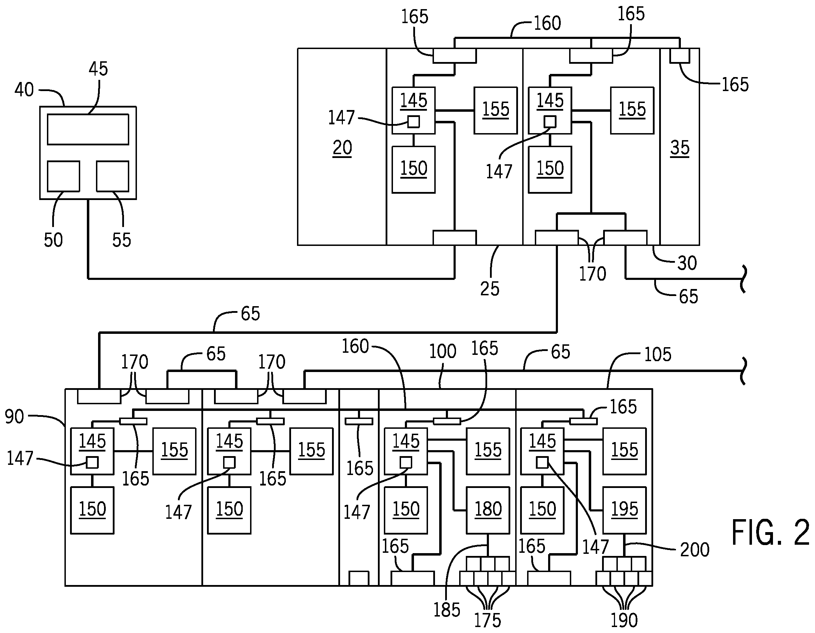

Turning first to Fig. 1 and Fig. 2, an exemplary industrial control system 5 with redundant subsystems is illustrated. The redundant subsystems may be provided to achieve a desired safety rating and/or a desired level of availability. The inputs and outputs are provided to two controllers and each controller monitors operation of the inputs and outputs as well as operation of the other controller to ensure correct operation of the control system 5. The illustrated control system 5 is an exemplary environment incorporating one embodiment of the present invention.

The industrial control system 5 includes a first controller chassis 10 and a second controller chassis 15. As illustrated, the first and second controller chassis 10 and 15 are modular and may be made up of numerous different modules. Additional modules may be added or existing modules removed and the first and second controller chassis 10 and 15 reconfigured to accommodate the new configuration. Optionally, either the first controller chassis 10 and/or the second controller chassis 15 may have a predetermined and fixed configuration. The first and second controller chassis 10 and 15 may have a single backplane or dual backplanes to facilitate communication between modules in the chassis. In the exemplary system shown, both the first and second controller chassis 10 and 15 include a power supply module 20, a controller module (or also referred to as simply "controller") 25, and network bridge modules 30. Each controller chassis 10 and 15 is further shown with an additional module 35 that may be selected according to the application requirements. For example, the additional module 35 may be an analog or digital input or output module, which will be referred to herein generally as an IO module. Optionally, each chassis may be configured to have multiple additional modules 35 according to the application requirements. For ease of illustration, a single additional module 35 is illustrated and the illustrated module is a redundancy module to facilitate dual chassis controller redundancy.

An operator interface is shown connected to the industrial control system. The operator interface 40 can include a processing device 45 and an input device 50. The input device 50 can include, but is not limited to, a keyboard, touchpad, mouse, track ball, or touch screen. The operator interface can further include an output device 55. The output device 55 can include, but is not limited to, a display, a speaker, or a printer. It is contemplated that each component of the operator interface 40 may be incorporated into a single unit, such as an industrial computer, laptop, or tablet computer. It is further contemplated that multiple operator interfaces can be distributed about the industrial control system 5. The operator interface 40 may be used to display operating parameters and/or conditions of the controlled machine or process, receive commands from the operator, or change and/or load a control program or configuration parameters. An interface cable connects the operator interface 40 to the controller 25 on the first controller chassis 10.

The first and second controller chassis 10 and 15 are connected to other devices by a network 65 according to the application requirements. A redundant network topology is established by connecting the network bridge modules 30 of the controller chassis 10 and 15 to a redundant network infrastructure 70 by a suitable network of cables and/or network devices, such as routers, switches, gateways, or the like. The network infrastructure 70 connects to a first remote chassis 75 and a second remote chassis 80. It is contemplated that the network cables may be custom cables configured to communicate via a proprietary interface or may be any standard industrial network, including, but not limited to, Ethernet/IP^{®}, DeviceNet^{®}, ControlNet^{®}, or OPC UA^{®}. The network bridge modules 30 and the network 70 are configured to communicate according to the protocol of the network to which it is connected and may be further configured to translate messages between two different network protocols. Dedicated interface cables 67 connect the redundancy modules 35 in each chassis to each other, providing a dedicated communication channel between the controller modules 25.

The first and second remote chassis 75 and 80 are positioned at varying positions about the controlled machine or process. As illustrated, the first and second remote chassis 75 and 80 are modular and may be made up of numerous different modules connected together in a chassis or mounted on a rail. Additional modules may be added or existing modules removed and the remote chassis 75 or 80 reconfigured to accommodate the new configuration. Optionally, the first and second remote chassis 75 and 80 may have a predetermined and fixed configuration. The first and second remote chassis 75 and 80 may have a single backplane or dual backplanes to facilitate communication between modules in the chassis. As illustrated, the first and second remote chassis 75 and 80 each includes a pair of network adapter modules 90, an input module 100, and an output module 105. Each network adapter module 90 is connected to the redundant network infrastructure 70 by a suitable network of cables. Each of the input modules 100 is configured to receive input signals from controlled devices, and each of the output modules 105 is configured to provide output signals to the controlled devices. Optionally, still other modules may be included in a remote chassis. Dual or triple redundant input modules 100 and/or output modules 105 may be included in a remote and/or controller chassis. It is understood that the industrial control network, industrial controller, and remote chassis may take numerous other forms and configurations without deviating from the scope of the invention. It should also be understood that an input module 100 and an output module 105 can form an IO module 110.

Referring next to Fig. 2, a portion of the exemplary industrial control system of Fig. 1 is illustrated in block diagram form. It is contemplated that each of the modules in the system may include a processor 145 and a memory 150. The processors 145 are configured to execute instructions and to access or store operating data and/or configuration parameters stored in the corresponding memory 150. The processors 145 are suitable processors according to the node requirements. It is contemplated that the processors 145 may include a single processing device or multiple processing devices executing in parallel and may be implemented in separate electronic devices or incorporated on a single electronic device, such as a field programmable gate array (FPGA) or application specific integrated circuit (ASIC). The processors 145 include random access memory 147 for processing runtime data. The memory devices 150 are non-transitory storage mediums that may be a single device, multiple devices, or may be incorporated in part or in whole within the FPGA or ASIC. Each of the modules also includes a clock circuit 155, and each clock circuit 155 is preferably synchronized with the other clock circuits 155 according to, for example, the IEEE-1588 clock synchronization standard. Each clock circuit 155 generates a time signal configurable to report the present time accurate to either microseconds or nanoseconds. Although identified in Fig. 2 with a single reference numeral, the processors 145, memory 150, and clock circuits 155 are not identical devices for each type of module. Rather, each type of module includes a processor 145, a memory 150, and a clock circuit 155 according to the requirements of the corresponding module.

Communication between modules mounted in the same chassis or contained within a single housing occurs via a backplane 160. The backplane 160 may be a single backplane or dual backplanes and include a corresponding backplane connector 165. Modules communicating via network media include ports 170 configured to process the corresponding network protocol. The input module 100 includes input terminals 175 configured to receive the input signals from the controlled devices. The input module 100 also includes any associated logic circuitry 180 and internal connections 185 required to process and transfer the input signals from the input terminals 175 to the processor 145. Similarly, each output module 105 includes output terminals 190 configured to transmit the output signals to the controlled devices. The output module 105 also includes any associated logic circuitry 195 and internal connections 197 required to process and transfer the output signals from the processor 145 to the output terminals 190.

In order to communicate via the network 65, two end points establish a connection between each other. A connection is the transport layer mechanism in an industrial protocol to transfer bi-directional data between two end points typically at a given periodic interval. Some connection types do not transfer data at periodic intervals, but instead, transfer data either on occurrence of an event or in response to a programmatic request/response mechanism. Some connections transfer data in only one direction while in the reverse direction only a heartbeat indication is sent to keep the connection alive. But, in general, connections transfer data in both directions.

A connection is opened by a connection open service request from a connection originator module to a connection target module through zero or more intermediate modules via messages sent over backplane(s) and/or network(s). The connection originator module is usually a controller module in a controller chassis or a human machine interface (HMI). The connection target module may be, for example, an IO module, a motor drive module, another controller module, network adapter module, or a network bridge module in the same chassis as controller module or in a remote chassis. The intermediate modules may be one or more of a network bridge module, network adapter module, and/or other network devices in the network infrastructure 70. The connection open request message contains parameters defining the connection such as a connection type, data size to transfer in each direction, a duration of a periodic interval at which the message is transmitted, a connection timeout duration, an end-to-end path from the originator module to the target module through intermediate modules, and the like. These parameters are used to allocate resources (e.g., CPU bandwidth, memory, and network bandwidth) to service the connection at runtime on a module associated with the connection. When resources are successfully allocated on the modules associated with a connection, a success response is conveyed back from the target module to the originator module in a reverse direction from the connection open request, and the connection is operational for runtime data transfer. If the resources cannot be allocated on one of the modules associated with a connection or if one of the modules cannot communicate the connection open request message to the next module in the path, then a failure response is returned to the originator module from the module at which the connection open request failed. As used herein, the term connection originator module refers to a physical module in the industrial control system 5 that is issuing a connection open service request. The term connection target module refers to a physical module in the industrial control system 5 that is receiving the connection open service request.

Once a connection is opened, it can be closed either through a connection close service request from the originator module to the target module of the connection through any intermediate modules that are part of the connection. Optionally, the connection may also be closed through a runtime connection timeout mechanism. During runtime, every module that is part of a connection monitors data reception from its upstream module(s) in one or both directions as appropriate for an end module or an intermediate module, respectively, and when data is not received in the monitored direction for a length of time equal to the connection timeout duration, the module at which the connection timeout occurred will close the connection to recover allocated resources. A connection timeout may happen as a result of a module failure or of a communication failure in a network or a backplane.

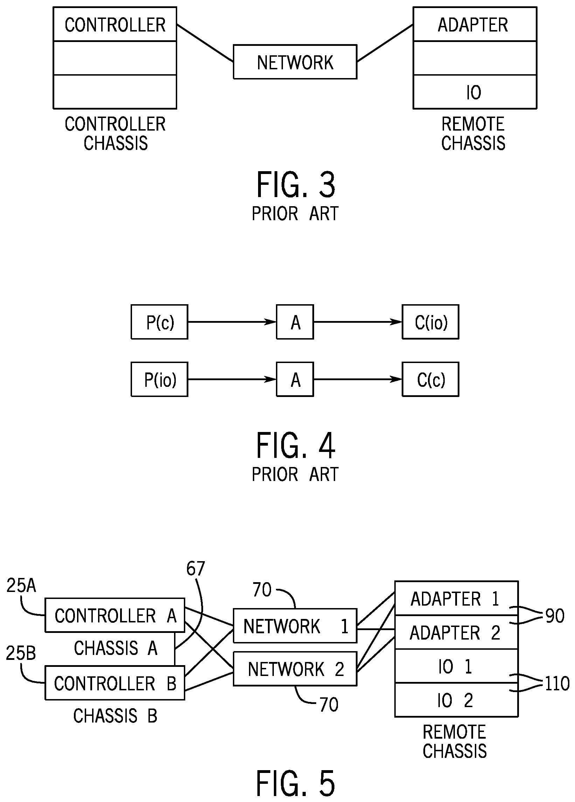

Turning next to Fig. 3, an arrangement of a prior art control system is illustrated. The control system includes a controller module in a controller chassis and a network adapter module and an IO module in a remote chassis, where the controller chassis and the remote chassis are connected via a network infrastructure. The controller module is capable of directly communicating on the network and is connected to network infrastructure through a network cable. Similarly, the network adapter module on the remote chassis is connected to the network infrastructure through a network cable and communicates with the IO module over a backplane within the remote chassis. A connection is opened from the controller module, acting as a connection originator module, to the IO module, acting as a connection target module, by sending a connection open request message over the network infrastructure to the network adapter module on the remote chassis. The network adapter module in turn sends the connection open message to the IO module over the backplane in the remote chassis. A success response is returned from the IO module to the controller module in the reverse direction via the network adapter module and the network infrastructure and the connection is now open to transfer data.

Once the connection has been established, the modules are no longer referred to as an originator module and a target module, as used during the open/close process. Rather, the terms producer and consumer are used to identify a runtime data producer and data consumer in a connection. Since the data transfer is bidirectional in general, the controller module is both a producer, P(c), and a consumer C(c), depending on the source and direction of the data flow. Similarly, the IO module is both a producer, P(io), and a consumer, C(io), depending on the source and direction of the data flow. As used herein, the term producer refers to a physical module in the industrial control system that is transmitting data to another physical module via the concurrent connection established between the two modules. The term consumer refers to a physical module in the industrial control system that is receiving data from another physical module via the concurrent connection established between the two modules.

With reference to Fig. 4, a representation of the bidirectional data flow in the connection for the prior art control system is illustrated. A runtime data flow model corresponding to the modules in Figure 3 is shown with block A representing the network adapter module. As illustrated, data flows from the controller module, P(c), to the IO module, C(io), when the controller module is generating data and sending the data to the IO module, and data flows in the other direction from the IO module, P(io), to the controller module, C(c), when the IO module is generating data and sending the data to the controller module via the connection. The connection has only one end-to end path identified between the source module and the target module with bi-directional runtime data flow capability when the connection is established.

In contrast, the present invention utilizes concurrent connections as disclosed in US 11,221,612, entitled System and Method of Communicating Data Over High Availability Industrial Control System, which is co-owned by the present Applicant and which is incorporated by reference herein in its entirety. A concurrent connection provides for multiple end-to-end paths in a single connection, improving the reliability of a HA control system. A HA control system typically includes several redundant subsystems such as redundant industrial controllers, redundant backplanes, redundant bridges, redundant adapters, redundant input/output (IO) modules, redundant motor drives, and/or redundant communication networks. Physical redundancy is provided in each subsystem such that if a failure occurs in one of the elements in a subsystem the operation can continue via the other element(s). With reference next to Fig. 5, one embodiment of a HA control system with redundant subsystems is illustrated. The illustrated embodiment includes two controllers 25, Controller A and Controller B, in separate chassis. The controllers 25 communicate with each other through a dedicated channel 67 between chassis. Each of the controllers 25 is connected to two network infrastructures 70, Network 1 and Network 2, through network cables. The remote chassis contains two IO modules 110, IO 1 and IO 2, and two network adapter modules 90, Adapter 1 and Adapter 2. The IO modules 110 and network adapter modules 90 on the remote chassis communicate with each other through dual backplanes within the remote chassis. The network adapter modules 90 are each connected to the two network infrastructures 70 through network cables. The IO modules 110 have a limited number of IO terminal points, for example, eight IO terminals, which can be connected to controlled devices. The illustrated example provides eight separate end-to-end paths for a concurrent connection established between the controllers 25 and the IO modules 110. Although illustrated with a single pair of redundant IO modules 110 and eight IO terminals, a typical HA control system has thousands of such redundant IO terminal points wired to controlled devices throughout the controlled machine or process.

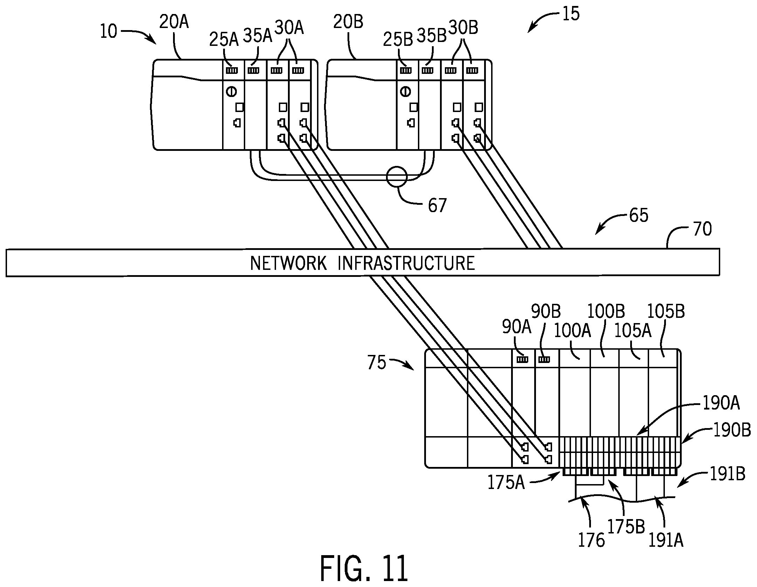

In a HA control system, a concurrent connection is used for bi-directional data transfer between redundant end modules, for example, between the redundant controllers 25A, 25B and redundant input modules 100A, 100B or output modules 105A, 106B shown in Fig. 11. A concurrent connection is the fault tolerant transport layer mechanism to transfer bi-directional data between multiple redundant end points in a HA control system at periodic intervals, responsive to events triggering a transfer, or responsive to a request/response transfer. A concurrent connection sets up and manages bi-directional data transfer between redundant end modules over multiple redundant end-to-end paths using the physical redundancies in each subsystem such that one or more failures in different subsystems will not affect data transfer so long as at least one end module is available at each end and at least one end-to-end path is available for data transfer between the modules at each end of the connection. Concurrent connections have architectural flexibility to deal with varying levels of physical redundancy in each subsystem. For example, a concurrent connection can handle subsystems with no, or with varying levels of redundancy, such as a single controller, dual redundant adapters, and triple redundant IO modules. A typical HA control system has thousands of concurrent connections between redundant controllers and redundant IO modules, between redundant controllers and other redundant controllers, between redundant controllers and a human machine interface (HMI), or a combination thereof. Although illustrated in separate chassis 10, 15, it is contemplated that redundant controllers 25A, 25B may be present in a single chassis or a pair of redundant controllers may be provided where each chassis includes two controllers 25.

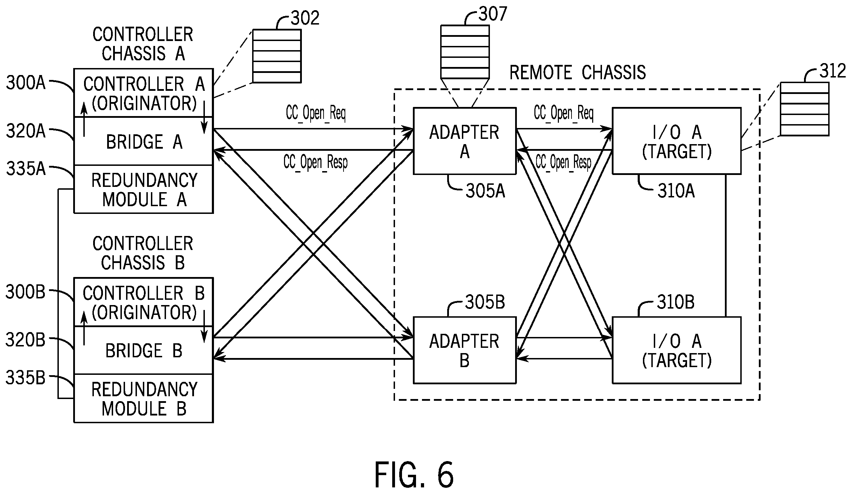

A more detailed description of the concurrent connections will now be provided. Fig. 6 shows the message flow model for a concurrent connection open process in an exemplary HA control system for a single concurrent connection. It should be noted that Fig. 6 only shows message flow and not all physical arrangements such as network infrastructure, backplanes, and the like. According to the illustrated embodiment, two controller chassis, Controller Chassis A and Controller Chassis B, are configured in a dual chassis redundancy mode. Each controller chassis includes a controller 300, a bridge module 320, and a redundancy module 335. Controller Chassis A contains Controller A 300A and Bridge A 320A. Controller Chassis B contains Controller B 300B and Bridge B 320B. There is a remote chassis with two adapter modules 305, Adapter A 305A and Adapter B 305B, and two IO modules 310, IO module A 310A and IO module B 310B. In addition, there are two redundancy modules, Redundancy Module A 335A and Redundancy Module B 335B, where one redundancy module is located in each controller chassis. The redundancy modules 335 are provided to facilitate communication between Controller A 300A and Controller B 300B. Each controller 300 includes a stored user control program which contains information such as control tasks to be executed, user routines that are part of those tasks, and the information for all concurrent connections that need to be created. The stored information for a concurrent connection includes parameters such as connection type, data size to transfer in each direction, duration of a periodic interval at which the message is to be transmitted, connection timeout duration, and logical path information for all modules that are part of the concurrent connection. The two controllers 300 are connection originators and are establishing a concurrent connection with the two IO modules 310, which are connection targets during the concurrent connection open process.

The two controllers 300 open concurrent connections as part of a startup process for the user control program stored in each controller. Before opening a concurrent connection, the two controllers 300 exchange connection information with each other and generate a globally unique concurrent connection serial number for each concurrent connection. The unique serial numbers for each concurrent connection are stored in each controller and are utilized during the connection open request.

To open a concurrent connection, each of the two controllers 300 first allocates resources for a per hop connection from the controller 300 to the bridge 320 on their respective chassis. The information about those allocated resources is stored along with concurrent connection parameters into a per concurrent connection control data structure (e.g., the table identified by reference numeral 302 for Controller A 300A). Then the two controllers, Controller A 300A and Controller B 300 B, each send a concurrent connection open request message, CC_Open_Req, to Bridge A 320A and Bridge B 320B, respectively, over the backplane to the bridge module 320 located on the respective controller chassis.

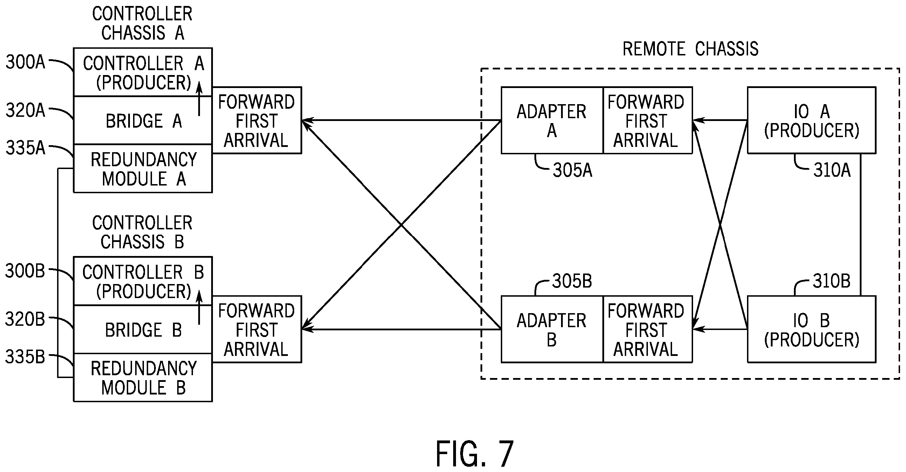

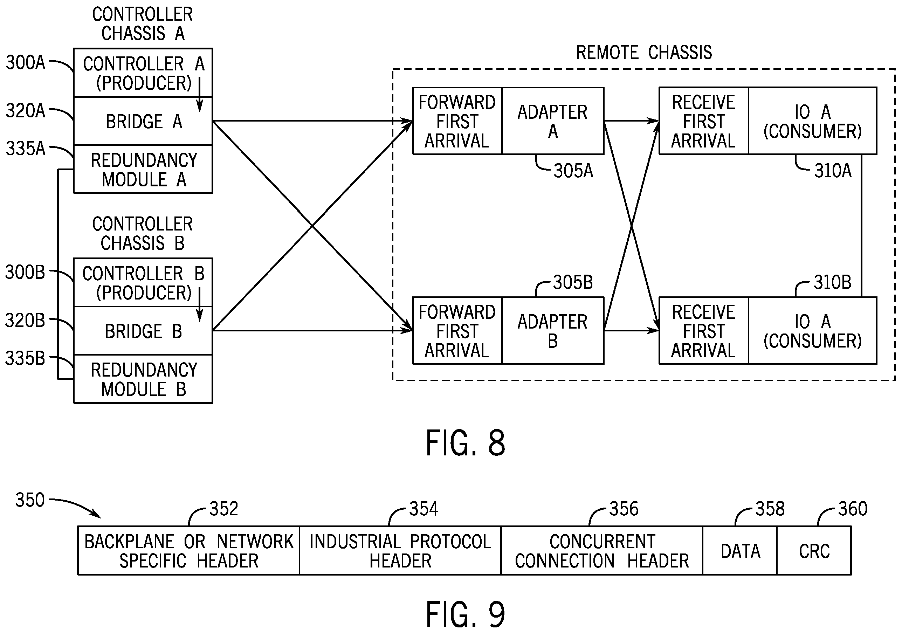

The runtime behavior of concurrent connections will now be described. Figs. 7 and 8 together show bidirectional data flow model in a single concurrent connection during runtime in a HA control system with dual chassis controller redundancy. Fig. 7 shows the HA control system discussed above with respect to Fig. 6 and further illustrates data flow to transfer input signals of controlled devices received at the input modules 310 to the controllers 300 in one direction of the concurrent connection previously opened. Fig. 8 shows data flow from the controllers 300 to transfer output signals for controlled devices to the IO modules 310 in the other direction of the concurrent connection. It should be noted that Figs. 7 and 8 only show data flow and not all physical arrangements such as the network infrastructure, backplanes, and the like. Fig 7 shows the IO modules 310 acting as data producers and the controllers 300 acting as data consumers for data flow in one direction, and Fig 8 shows the controllers 300 acting as data producers and the IO modules 310 acting as data consumers for data flow in the other direction. For discussion herein, it will be assumed that the concurrent connection type is cyclical, meaning data will be produced by both the IO modules 310 and the controllers 300 at periodical intervals for transmission in both directions.

It should be noted that in following description for the data flow model discussed with respect to runtime operation the terms upstream and downstream are used with respect to the direction of data flow from a producer to a consumer and will not always match with use of those terms in the concurrent connection open process from an originator to a target as discussed above. Referring now to Fig. 7, for every data production cycle, an IO application layer task executing on each of the redundant IO modules 310, IO module A 310A and IO module B 310B, on the remote chassis will sample input signals from the controlled devices. The IO application layer task executing on each of the redundant IO modules 310 will then exchange sampled input data with each other via the backplane 160 in the remote chassis and reach an agreement on data to produce and an associated data sequence number to use during the current data production cycle. The IO application layer task in each redundant IO module 310 will then provide the same agreed upon data and sequence number to a concurrent connection layer executing on the redundant IO module 310 along with the unique concurrent connection identifier for data production. The concurrent connection layer on a redundant IO module 310 will use the unique concurrent connection identifier for each concurrent connection to find the per concurrent connection control data structure stored on that module.

The concurrent connection layer will then build a concurrent connection data packet for the given concurrent connection and send it to downstream adapter modules 305, Adapter A 305A and Adapter B 305B, over the backplane 160 in the remote chassis. Fig. 9 shows the format of a concurrent connection data packet 350 according to one embodiment of the invention. The concurrent connection data packet 350 contains one or more backplane or network specific header(s) 352, as required for the communication medium on which the data packet 350 is to be transmitted, followed by an industrial protocol header 354, which includes information such as the packet type, a hop connection identifier, and the like. The protocol header 354 is followed by a concurrent connection header 356, data 358, and, lastly, a packet CRC 360. The concurrent connection header 356 includes information such as the unique concurrent connection serial number, the data sequence number generated by the application layer task, and a separate CRC determined as a function of the data in the concurrent connection header 356 and the data payload 358. This separate CRC in the concurrent connection header is used to ensure integrity of the concurrent connection header and the data from producer to consumer. The final, packet CRC 360 is used during communication on a network or a backplane on a hop-by-hop basis.

Referring back to Fig. 7, when an adapter module 305 receives a concurrent connection data packet 350 from an upstream IO module 310 over the backplane, the adapter module 305 will verify the separate CRC present in the concurrent connection header 356 is valid. If the CRC check on the separate CRC fails, the adapter module 305 will drop the concurrent connection data packet 350. If the separate CRC check passes, then the adapter module 305 will use the hop connection identifier and concurrent connection serial number in the data packet 350 to identify the hop connection from which it received the data packet and the corresponding per concurrent connection control data structure stored on the adapter module 305. The adapter module 305 will then check if the data sequence number in the data packet 350 is newer than a value of a data sequence number stored in the concurrent connection control data structure. If the sequence number is a duplicate to the stored value or is older than the stored value, the adapter module 305 will drop the data packet 350. If the sequence number is newer than the prior stored value, the adapter module 305 will store that the new sequence number in the concurrent connection control data structure and build data packets for transmission to each of the two downstream bridge modules 320 over the network.

This procedure defines a forward first arrival scheme for the adapter module 305. In other words, the adapter module 305 will only forward the first concurrent connection data packet 350 received from each IO module with the same data. The adapter module 305 is indifferent whether the data packet 350 is received from IO Module A or IO Module B, but rather is only concerned that the first packet of the two packets is retransmitted to the next hop, while the second, or any additional redundant data packets are dropped.

When a bridge module 320 receives a concurrent connection data packet 350 from an upstream adapter module 305 over the network, the bridge module 320 will follow the same process as described above for the adapter modules 305 receiving a concurrent connection data packet from the IO modules 310. If all checks pass in the bridge module 320, then the bridge module 320 will, in turn, build and send concurrent connection data packets to the downstream controllers 300, over the backplane in the local chassis and/or the dedicated communication channel between controller modules 300 defined via the redundancy modules 335 and the dedicated interface cable.

When a controller module 300 receives a concurrent connection data packet 350 from an upstream bridge module 320, the controller module 300 will follow the same process as described above for receiving a concurrent connection data packet from an upstream module. If all checks pass, then the controller module 300 will provide the data and sequence number to an application layer task executing in the controller 300. The application layer tasks in each of the two controllers 300 will exchange the data and sequence number received by one controller with the other controller and will arrive at an agreed upon input data to use for a user control program executing on the controller 300.

The user control program is executing on each controller 300 and produces output data to send to the IO Modules 310. The application layer tasks executing in each of the two controllers 300 will exchange the output data produced on each controller with the other controller and will arrive at agreed upon output data and a sequence number for the output data to send to the IO Modules 310. The application layer task in each redundant controller 300 will then provide the same agreed upon data and sequence number to the concurrent connection layer along with the unique concurrent connection identifier for the concurrent connection by which the output data is to be transmitted to the IO Modules 310.

With reference next to Fig. 8, a concurrent connection data packet will be generated and transmitted from the controllers 300 as producers to the IO Modules 310 as consumers in a manner similar to that described above for the reverse direction of data transfer shown in Fig. 7. The concurrent connection layer on a redundant controller module will use the unique concurrent connection identifier to find the per concurrent connection control data structure stored on that module build a concurrent connection data packet 350 for the given concurrent connection and send the data packet to the downstream bridge modules 320 over backplane and/or the dedicated communication channel between controller modules defined via the redundancy modules 335 and the dedicated interface cable.

When a bridge module 320 receives a concurrent connection data packet 350 from an upstream controller 300, the bridge module 320 will follow the same process as described above for the forward first arrival scheme, accepting the first concurrent connection data packet 350 with a particular sequence number and dropping any redundant data packet. If all checks pass, then the bridge module 320 will build and send concurrent connection data packets to each of the two downstream adapter modules 305 over the network.

When an adapter module 305 receives a concurrent connection data packet from an upstream bridge module 320 over the network, the adapter module 305 will also follow the forward first arrival scheme, accepting the first concurrent connection data packet 350 with a particular sequence number and dropping any redundant data packet. If all checks pass, then the adapter module 305 will build and send concurrent connection data packets to each of the two downstream IO modules 310 over the backplane.

When an IO module 310 receives a concurrent connection data packet from an upstream adapter module 305 over the backplane, the IO module 310 will similarly follow the receive first arrival scheme, accepting the first concurrent connection data packet 350 with a particular sequence number and dropping any redundant data packet. If all checks pass, then each IO Module 310 will provide the data and sequence number to an application layer task executing in the IO module. The application layer tasks in each IO module 310 will exchange the data and sequence number received at that IO module with the data and sequence number received at the other IO module and will arrive at agreed upon output data to use for providing output signals to each of the controlled devices. The application layer tasks in each of the redundant IO modules 310 will then apply the agreed upon output data to terminals of the IO modules as output signals to control operation of the controlled devices. Thus, the process of bidirectional data transfer is carried out for each production cycle.

As discussed above, safety controllers are configured to achieve a desired safety integrity level. The diagnostic capabilities may include, for example, redundant input and output channels, monitoring of an output channel to verify a desired control signal is being transmitted, generating test signals to verify the input or output channel change state, and the like. With reference again to Fig. 2, the memory 150 within each controller 25 may be divided into two portions. A first portion of the memory 150 is defined as standard memory, and a second portion of the memory is defined as safety memory. The processor 145 may be a single processor configured to execute both the standard functions and the safety functions. If a single processor is executing both the standard functions and the safety functions, it is preferrable that the processor 145 include multiple processing cores, where at least one of the processing cores is configured to execute the standard functions and at least one of the processing cores is configured to execute the safety functions. Optionally, the processor 145 may include dual processors where one processor is configured to execute the standard functions and another processor is configured to execute the safety functions. Data in the standard portion of the memory 150 may have access limited to the standard processing core and/or standard processor. Similarly, data in the safety portion of the memory 150 may have access limited to the safety processing core and/or safety processor. One safety function performed by the safety processing core and/or safety processor may be to execute a parallel program to a control program executing on the standard processing core and/or standard processor. The safety processing core and/or safety processor may compare data from the control program executed by the standard processor to data from the control program executed by the safety processor. If the data matches, the safety controller determines that the standard controller is functioning properly. Another safety function performed by the safety processing core and/or safety processor may be to receive input signals fed back to an input module which correspond to an output signal from an output module. The safety processing core and/or safety processor may read a desired value to be output from each channel of the output module and compare the desired value to the input signal to verify correct operation of the output channel. Still other diagnostic and safety functions may be executed within the safety processing core and/or safety processor to achieve the desired SIL rating.

In operation, the present invention permits a controller 25 to operate both as a HA controller and as a safety controller. With reference again to Figs, 1 and 5, it is contemplated that each controller 25 is a safety controller, and each safety controller 25 is configured to independently achieve a SIL-2 safety rating. In other words, the safety controller 25 executing by itself to control a machine or process includes the required run time diagnostic capabilities to detect a failure or incorrect operation of the machine or process being controlled by the safety controller 25 such that the controlled system obtains the SIL-2 rating. However, each safety controller 25 is also arranged in the redundant configuration of Fig. 1 to operate as a HA controller. As discussed above, traditional HA controllers and traditional safety controllers have differing objectives, namely maintaining operation in an HA controller vs detecting failure and entering a safe operating state for a safety controller. The safety controllers 25 of the present invention are configured to operate both as the HA controller and the safety controller. An exemplary industrial control system with redundant safety controllers 25A, 25B is shown in Fig. 11.

In a first operating mode, the two safety controllers 25A, 25B operate in tandem to provide a first safety rating for the controlled machine or process. According to one aspect of the invention, the first safety rating may be an identical safety rating to the safety rating provided by a single safety controller 25. Unlike traditional HA systems, where one controller operates to control the machine or process and the second controller remains in a stand-by mode in the event of a failure, both safety controllers 25A, 25B operate in tandem to control operation of the machine or process. This operation will be discussed in more detail below. If one of the two safety controllers 25 detects a failure which will prevent that safety controller 25 from continuing normal operation, the other safety controller assumes full control of the machine or process at the same safety rating provide by both safety controllers 25 operating in tandem. Thus, the two safety controllers can provide high availability operation of a safety system with a consistent safety rating in the event of a single failure.

According to another aspect of the invention, the two safety controllers 25A, 25B may operate in tandem to provide a first safety rating for the controlled machine or process, but permit continued operation of the controlled machine or process at a second safety rating, lower than the first safety rating, in the event of a failure of one of the safety controllers 25A or 25B. The presence of two safety controllers 25A, 25B operating in tandem permits additional diagnostic capabilities not available to a single safety controller 25 controlling a machine or process. Thus, the two safety controllers 25A, 25B may achieve, for example, a SIL-3 safety rating when operating in tandem to control the machine or process. When one of the two safety controllers 25A or 25B detects a failure which will prevent the safety controller from continuing normal operation, the other safety controller still assumes full control of the machine or process. Because some of the diagnostic capabilities that were available with dual controllers are no longer available with a single controller, the system is only operating at the safety rating, such as a SIL-2 safety rating, which may be achieved by the single safety controller. This operation is considered high availability operation with degradation. The controlled machine or process is able to continue operating in the presence of a single failure even if the safety rating at which it operates is reduced.

High availability operation with degradation provides two different options of continued operation. According to one aspect of the invention, an application may only require operation at the lower safety rating. Under such an application, the system provides safety at greater safety rating than required during normal operation while also having high availability operation at the lower safety rating which it must maintain. According to another aspect of the invention, an application may require operation at the higher safety rating. In such an application, it may still be desirable to provide high availability operation, such that the controlled machine or process does not immediately shut down or enter another predefined safety state upon detection of the first fault condition. Rather than an immediate shut-down or immediate entry into the safety state, the controlled machine or process may be permitted to continue operation for some period of time to complete a process or operation and then be shut down or brought to a safe operating state by the machine operator if needed to complete the repair. Upon completion of the repair, the controlled machine or process resumes operation at the higher safety rating. As long as the repair is completed within a mean repair time for the controlled machine or process, the application is permitted to be rated at the higher safety rating during normal operation. The mean repair time is a time defined by the application and may be, for example, in a range between twenty-four (24) and seventy-two (72) hours.

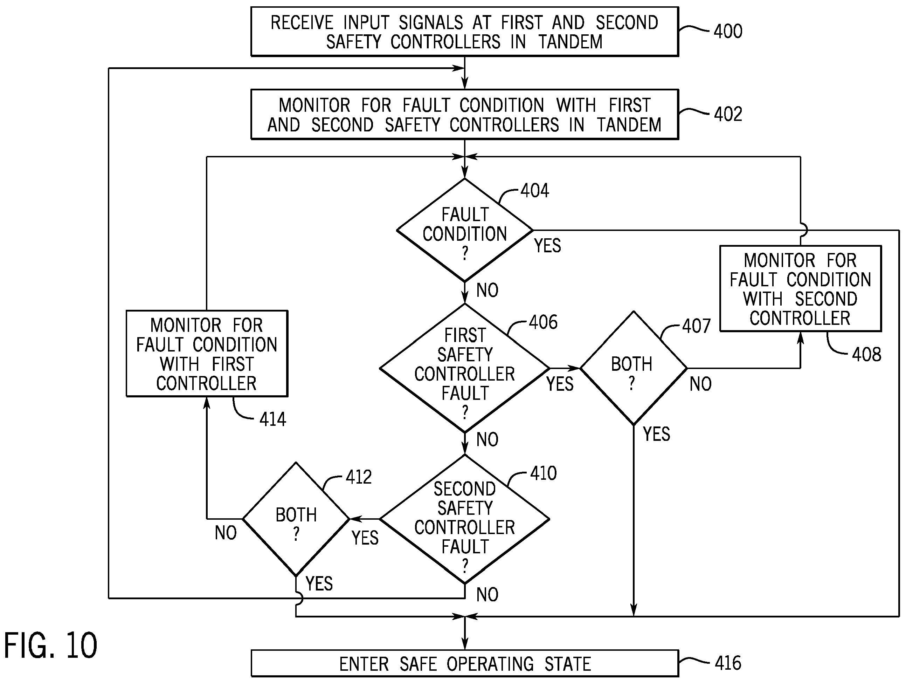

Turning next to Fig. 10, a flow diagram illustrates operation of a pair of safety controllers as both safety controllers and high availability controllers according to one embodiment of the invention. With reference also to Fig. 11, both the first safety controller 25A and the second safety controller 25B receive input signals from one or more input modules 100A, 100B and monitor those input signals for fault conditions in the controlled machine or process, as shown in steps 400 and 402. Utilizing concurrent connections, both safety controllers 25A, 25B may execute in tandem rather than having a single controller execute the safety control while the second controller waits in a reserve capacity. Each input module 100A, 100B receives the input signals 176 at input terminals 175. In a redundant system, a first input module 100A and a second input module 100B are both mounted within a remote chassis 75 and communicate with each other via a backplane within the remote chassis. Both input modules 100A, 100B receive redundant input signals 176 from devices on the controlled machine or process corresponding to a present operating state of the controlled machine or process. The input modules 100A, 100B first communicate between each other to agree on data for inclusion in a network packet to the safety controllers 25A, 25B via the concurrent connection. The input modules 100A, 100B verify that they have both received the same data and provide a first validation of the data received from the controlled machine or process for delivery to the safety controllers 25A, 25B. The data received at each input module 100A, 100B should be identical and upon verification of the received data and agreement that the received data is valid, the two input modules 100A, 100B each generate a data packet with the agreed upon data for transmission to the safety controllers 25A, 25B.

Each input module 100A, 100B then transmits their respective data packet to both safety controllers 25A, 25B using the concurrent connection established over the network 65. The first safety controller 25A receives the data packets from both the first input module 100A and the second input module 100B. The second safety controller 25B similarly receives the data packets from both the first input module 100A and the second input module 100B. As discussed above with respect to concurrent connections, each safety controller 25A, 25B will use data from the first of the two data packets received and discard the second data packet received. Both safety controllers 25A, 25B have now received the input signals from the input modules 100A, 100B.

The two safety controllers 25A, 25B are in communication with each other via the dedicated communication channel established by the dedicated interface cables 67 connecting the redundancy modules 35 in each chassis 10, 15. Each safety controller 25A, 25B may update the other safety controller 25A, 25B of its present operating state which includes the data just received at each safety controller. It is contemplated that a safety program executing in each safety controller 25A, 25B may compare the data received at the corresponding safety controller with the data received at the other safety controller to verify the correct data has reached each controller. If different data is received at each controller, a fault condition may be detected. Optionally, one of the two safety controllers 25 may be identified as a primary controller and the data first received at the primary controller may be utilized unless a fault condition for the primary controller has been detected. If a fault condition is detected for the primary controller, the two controllers may then utilize data first received at the secondary controller. Each safety controller 25A, 25B further receives a checksum for the data which was inserted into the data packet. One of the safety controllers 25A, 25B may identify a failure in transmission of the data by comparing a checksum of the received data to the checksum present in the data packet. The safety controllers 25A, 25B may decide to continue operation with data that generates a matching checksum and discard data that generates a mismatching checksum. It is further contemplated the safety program executing in each safety controller 25A, 25B may verify that one or more of the input signals in the safety data are in an expected operating state. An input signal in an unexpected state may indicate a fault condition of the sensor or other device generating the input signal or of a faulted operating state for the controlled machine or process.

It is another aspect of the invention that the two safety controllers 25A, 25B control operation of the machine or process in tandem. Having received input signals from the input modules 100, a control program in each safety controller 25A, 25B may process these input signals to generate desired output signals. The first safety controller 25A may execute a first control program in addition to the first safety program. The first control program generates a first set of output signals, where each output signal corresponds to a desired output of one channel on an output module 105. The second safety controller 25B may execute a second control program in addition to the second safety program. The second control program generates a second set of output signals, where each output signal corresponds to a desired output of one channel on an output module 105. According to one aspect of the invention, the first control program and the second control program are identical such that each set of output signals should be identical for an identical set of input signals. Optionally, the first control program and the second control program may be diverse control programs, where the diverse control programs execute differently yet generate the same output signals for an identical set of input signals. The diverse programs may be utilized by the first and second safety controllers 25A, 25B to detect a failure in execution of one of the two control programs.

Similar to the operation of the input modules 100, the safety controllers 25A, 25B must first agree on what data to transmit to the output modules 105 before transmitting the output signals. The first safety controller 25A shares the output signals generated by the first control program with the second safety controller 25B via the dedicated communication channel, and the second safety controller 25B shares the output signals generated by the second control program with the first safety controller 25A via the dedicated communication channel. The two controllers 25A, 25B can verify correct operation of each controller and agree on a set of output signals to be transmitted to the output modules 105A, 105B. Each safety controller 25A, 25B generates a data packet with the agreed upon data for transmission to the output modules 105A, 105B via the concurrent connection.

Each safety controller 25A, 25B then transmits their respective data packet to both output modules 105A, 105B using the concurrent connection established over the network 65. The first output module 105A receives the data packets from both the first safety controller 25A and the second safety controller 25B. The second output module 105B similarly receives the data packets from both the first safety controller 25A and the second safety controller 25B. As discussed above with respect to concurrent connections, each output module 105A, 105B will use data from the first of the two data packets received and discard the second data packet received. Both output module 105A, 105B have now received the output signals from the safety controllers 25A, 25B. Each output module 105A, 105B sets the output channels present on that output module to the corresponding output signal received from the safety controllers 25A, 25B.

As shown in steps 404 and 416, if the safety controllers 25A, 25B detect a fault in the controlled machine or process, the safety controllers 25A, 25B may still put the controlled machine or process into a safe operating state even though they act also as a HA control system. As illustrated in Fig. 10, there are three different types of fault conditions that may be monitored by the safety controllers 25A, 25B. A first fault condition detected by each of the safety controllers 25A, 25B at step 404 corresponds to a fault in the controlled machine or process that does not impact operation of either safety controller 25A, 25B. Such a fault may be, for example, a failure in a sensor or actuator on the controlled machine or process. The first fault is one in which an option for HA control does not exist, but rather presents an actual fault which requires entering a safe operating state. The safety controllers 25A, 25B put the controlled machine or process into a safe operating state as a result of the detection of this fault condition.

At step 406, a second fault condition may be detected, where the second fault condition affects operation of the first safety controller 25A. Such a fault condition includes, but is not limited to, a failure in an input module or an output module present within the chassis 10 of the first safety controller 25A; a failure in the control program executing on the first safety controller 25A; or a failure in communications via the network infrastructure 70 to the first safety controller 25A or via a network module 30A present in the first chassis 10. Such a fault condition will prevent the first safety controller 25A from operating properly. The first safety controller 25A, therefore, discontinues execution of the first control program and stops transmitting output signals to the output modules 105A, 105B. The first safety controller 25A may communicate its fault condition to the second safety controller 25B. In some instances, the first safety controller 25A may be unable to communicate with the second safety controller 25B, and the second safety controller 25B recognizes that no further communication is being received from the first safety controller 25A. The second safety controller 25B utilizes its own output signals and forgoes comparison with the first safety controller 25A while the first safety controller is in the fault condition. The second safety controller 25B, therefore, may continue to control operation of the controlled machine or process as a HA controller while the first safety controller 25A is faulted. At step 407, the second safety controller 25B checks for its own fault condition that affects operation of the second safety controller 25B. If both safety controllers 25A, 25B are unable to monitor the controlled system or process for a fault condition, the safety controllers 25A, 25B will jump to step 416 to put the controlled machine or process in a safe operating state. As shown at step 408, the control system continues operating with just the second safety controller 25B monitoring the controlled machine or process for further fault conditions, thereby providing high availability operation while maintaining at least the safety rating afforded by the second safety controller 25B.

While the safety rating may be degraded during operation with just the second safety controller 25B, the desired availability of the control system continues. As indicated above, this lower safety rating may be an acceptable safety rating. Operation of the controlled machine or process may then continue indefinitely as long as the second safety controller 25B does not detect a fault condition at step 404 or within its own controller. In applications where the higher safety rating provided by redundant controllers is desired, a message is posted to the operator or technician indicating the first safety controller 25A has detected a fault condition which prevents its continued operation. The operator or technician may then take steps to repair the fault condition within the mean repair time of the controlled machine or process.

At step 410, a third fault condition may be detected, where the third fault condition affects operation of the second safety controller 25B. Such a fault condition includes, but is not limited to, a failure in an input module or an output module present within the chassis 15 of the second safety controller 25B; a failure in the control program executing on the second safety controller 25B; or a failure in communications via the network infrastructure 70 to the second safety controller 25B or via a network module 30B present in the second chassis 15. Such a fault condition will prevent the second safety controller 25B from operating properly. The second safety controller 25B, therefore, discontinues execution of the second control program and stops transmitting output signals to the output modules 105A, 105B. The second safety controller 25B may communicate its fault condition to the first safety controller 25A. In some instances, the second safety controller 25B may be unable to communicate with the first safety controller 25A, and the first safety controller 25A recognizes that no further communication is being received from the second safety controller 25B. The first safety controller 25A utilizes its own output signals and forgoes comparison with the second safety controller 25B while the second safety controller is in the fault condition. The first safety controller 25A, therefore, may continue to control operation of the controlled machine or process as a HA controller while the second safety controller 25B is faulted. At step 412, the first safety controller 25A checks for its own fault condition that affects operation of the first safety controller 25A. If both safety controllers 25A, 25B are unable to monitor the controlled system or process for a fault condition, the safety controllers 25A, 25B will jump to step 416 to put the controlled machine or process in a safe operating state. As shown at step 414, the control system continues operating with just the first safety controller 25A monitoring the controlled machine or process for further fault conditions, thereby providing high availability operation while maintaining at least the safety rating afforded by the first safety controller 25A.

While the safety rating may be degraded during operation with just the first safety controller 25A, the desired availability of the control system continues. As indicated above, this lower safety rating may be an acceptable safety rating. Operation of the controlled machine or process may then continue indefinitely as long as the first safety controller 25A does not detect a fault condition at step 404 or within its own controller. In applications where the higher safety rating provided by redundant controllers is desired, a message is posted to the operator or technician indicating the second safety controller 25B has detected a fault condition which prevents its continued operation. The operator or technician may then take steps to repair the fault condition within the mean repair time of the controlled machine or process.

It should be understood that the invention is not limited in its application to the details of construction and arrangements of the components set forth herein. The invention is capable of other embodiments and of being practiced or carried out in various ways. Variations and modifications of the foregoing are within the scope of the present invention. It also being understood that the invention disclosed and defined herein extends to all alternative combinations of two or more of the individual features mentioned or evident from the text and/or drawings. All of these different combinations constitute various alternative aspects of the present invention. The embodiments described herein explain the best modes known for practicing the invention and will enable others skilled in the art to utilize the invention.

In the preceding specification, various embodiments have been described with reference to the accompanying drawings. It will, however, be evident that various modifications and changes may be made thereto, and additional embodiments may be implemented, without departing from the broader scope of the invention as set forth in the claims that follow. The specification and drawings are accordingly to be regarded in an illustrative rather than restrictive sense.
**The following is a list of further preferred embodiments of the invention:**
Embodiment 1. A method of controlling an industrial control system, the method comprising the steps of:
   executing a first control program and a first safety program on a first safety controller, wherein:
   the first control program receives a plurality of input signals and generates a plurality of first output signals, and
   the first safety program monitors the industrial control system for a first fault condition;
   executing a second control program and a second safety program on a second safety controller in tandem with the first safety controller executing the first control program and the first safety program, wherein:
      the second control program receives the plurality of input signals and generates a plurality of second output signals,
      each of the plurality of second output signals corresponds to one of the plurality of first output signals, and
      the second safety program monitors the industrial control system for a second fault condition;
      transmitting the plurality of first output signals from the first safety controller to at least one output module;
      transmitting the plurality of second output signals from the second safety controller to the at least one output module;
      setting each output channel on the at least one output module either to one of the plurality of first output signals or to one of the plurality of second output signals, wherein:
         each output channel corresponds to one of the plurality of first and second output signals,
         each output channel is set only to one of the corresponding first and second output signals; and
         operating at a first safety level while the first safety controller monitors the industrial control system for the first fault condition and the second safety controller monitors the industrial control system for the second fault condition.
Embodiment 2. The method of embodiment 1, further comprising the steps of:
   detecting either the first fault condition with the first safety controller or the second fault condition with the second safety controller; and
   operating at a second safety level when either the first or second fault condition is detected, wherein the second safety level is lower than the first safety level.
Embodiment 3. The method of embodiment 2, further comprising the steps of:
   repairing either the first fault condition or the second fault condition which was detected within a mean repair time; and
   resuming operation at the first safety level after repairing either the first fault condition or the second fault condition.
Embodiment 4. The method of embodiment 2 wherein beginning operation at the second safety level further comprises the steps of:
   discontinuing execution of the first control program and transmitting the plurality of first output signals when the first safety controller detects the first fault condition;
   discontinuing execution of the second control program and transmitting the plurality of second output signals when the second safety controller detects the second fault condition;
   setting each output channel on the at least one output module to the plurality of second output signals when the first safety controller detects the first fault condition; and
   setting each output channel on the at least one output module to the plurality of first output signals when the second controller detects the second fault condition.
Embodiment 5. The method of embodiment 1 further comprising the step of establishing a concurrent connection between a first pair of redundant end modules and a second pair of redundant end modules, wherein the first pair of redundant end modules is the first safety controller and the second safety controller and the second pair of redundant end modules is a first output module and a second output module.
Embodiment 6. The method of embodiment 5 further comprising the steps of:
   comparing each of the plurality of first output signals to the corresponding second output signal with at least one of the first safety controller and the second safety controller; and
   agreeing on either the plurality of first output signals or the plurality of second output signals to be transmitted from the first and second safety controllers.
Embodiment 7. The method of embodiment 6 further comprising the steps of:
   receiving the plurality of first output signals at the at least one output module; and
   receiving the plurality of second output signals at the at least one output module, wherein the step of setting each output channel on the at least one output module uses a first received output signal between the plurality of first output signals and the plurality of second output signals.
Embodiment 8. The method of embodiment 1, further comprising the steps of:
   detecting either the first fault condition with the first safety controller or the second fault condition with the second safety controller;
   continuing operation at the first safety level when either the first or second fault condition is detected;
   discontinuing execution of the first control program and transmitting the plurality of first output signals when the first safety controller detects the first fault condition;
   discontinuing execution of the second control program and transmitting the plurality of second output signals when the second safety controller detects the second fault condition;
   setting each output channel on the at least one output module to the plurality of second output signals when the first safety controller detects the first fault condition; and
   setting each output channel on the at least one output module to the plurality of first output signals when the second safety controller detects the second fault condition.
Embodiment 9. A method of controlling an industrial control system, the method comprising the steps of:
   executing a first safety program on a first safety controller;
   executing a second safety program on a second safety controller in tandem with the first safety controller executing the first safety program;
   detecting a first fault condition in the industrial control system with the first safety program executing on the first safety controller;
   detecting a second fault condition in the industrial control system with the second safety program executing on the second safety controller;
   detecting a third fault condition in the industrial control system with either the first safety program executing on the first safety controller or the second safety program executing on the second safety controller;
   disabling monitoring for the third fault condition by the first safety controller upon detecting the first fault condition;
   disabling monitoring for the third fault condition by the second safety controller upon detecting the second fault condition;
   entering a safe operating state for the industrial control system when either the first safety program or the second safety program detects the third fault condition; and
   operating at a first safety level while both the first safety controller and the second safety controller monitor the industrial control system for the third fault condition.
Embodiment 10. The method of embodiment 9, further comprising the step of operating at a second safety level when either the first or second fault condition is detected, wherein the second safety level is lower than the first safety level.
Embodiment 11. The method of embodiment 10, further comprising the steps of:
   repairing either the first fault condition or the second fault condition which was detected within a mean repair time;
   enabling monitoring for the third fault condition by both the first safety controller and the second safety controller after repairing either the first fault condition or the second fault condition; and
   resuming operation at the first safety level after repairing either the first fault condition or the second fault condition.
Embodiment 12. The method of embodiment 9, further comprising the step of continuing operation at the first safety level when either the first or second fault condition is detected.
Embodiment 13. The method of embodiment 9 further comprising the step of establishing a concurrent connection between a first pair of redundant end modules and a second pair of redundant end modules, wherein the first pair of redundant end modules is the first safety controller and the second safety controller and the second pair of redundant end modules is another pair of redundant modules in the industrial control system.
Embodiment 14. The method of embodiment 13 further comprising the steps of:
   communicating data between the first safety controller and the second safety controller for inclusion in a data packet for the concurrent connection;
   agreeing on the data to be included in the data packet with the first safety controller and the second safety controller;
   generating a first data packet for transmission by the first safety controller, wherein the first data packet includes the data agreed upon; and
   generating a second data packet for transmission by the second safety controller, wherein the second data packet includes the data agreed upon.
Embodiment 15. The method of embodiment 14 further comprising the steps of:
   receiving the first data packet and the second data packet at the other pair of redundant modules;
   using the data from a first received data packet with the other pair of redundant modules, wherein the first received data packet is either the first or second data packet with the data agreed upon arriving earliest in time at the other pair of redundant modules; and
   discarding a second received data packet at the other pair of redundant modules, wherein the second received data packet is either the first or second data packet with the data agreed upon arriving latest in time at the other pair of redundant modules.
Embodiment 16. A method of controlling an industrial control system, the method comprising the steps of:
   executing a first safety program on a first safety controller;
   executing a second safety program on a second safety controller in tandem with the first safety controller executing the first safety program;
   detecting a first fault condition in the industrial control system with the first safety program executing on the first safety controller;
   detecting a second fault condition in the industrial control system with the second safety program executing on the second safety controller;
   detecting a third fault condition in the industrial control system with either the first safety program executing on the first safety controller or the second safety program executing on the second safety controller;
   disabling monitoring for the third fault condition by the first safety controller upon detecting the first fault condition;
   disabling monitoring for the third fault condition by the second safety controller upon detecting the second fault condition;
   entering a safe operating state for the industrial control system when either the first safety program or the second safety program detects the third fault condition;
   operating at a first safety level while both the first safety controller and the second safety controller monitor the industrial control system for the third fault condition; and
   operating at a second safety level when either the first or second fault condition is detected, wherein the second safety level is lower than the first safety level.
Embodiment 17. The method of embodiment 16 further comprising the step of establishing a concurrent connection between a first pair of redundant end modules and a second pair of redundant end modules, wherein the first pair of redundant end modules is the first safety controller and the second safety controller and the second pair of redundant end modules is another pair of redundant modules in the industrial control system.
Embodiment 18. The method of embodiment 17 further comprising the steps of:
   communicating data between the first safety controller and the second safety controller for inclusion in a data packet for the concurrent connection;
   agreeing on the data to be included in the data packet with the first safety controller and the second safety controller;
   generating a first data packet for transmission by the first safety controller, wherein the first data packet includes the data agreed upon; and
   generating a second data packet for transmission by the second safety controller, wherein the second data packet includes the data agreed upon.
Embodiment 19. The method of embodiment 18 further comprising the steps of:
   receiving the first data packet and the second data packet at the other pair of redundant modules;
   using the data from a first received data packet with the other pair of redundant modules, wherein the first received data packet is either the first or second data packet with the data agreed upon arriving earliest in time at the other pair of redundant modules; and
   discarding a second received data packet at the other pair of redundant modules, wherein the second received data packet is either the first or second data packet with the data agreed upon arriving latest in time at the other pair of redundant modules.
Embodiment 20. The method of embodiment 16, further comprising the steps of:
   repairing either the first fault condition or the second fault condition which was detected within a mean repair time;
   enabling monitoring for the third fault condition by both the first safety controller and the second safety controller after repairing either the first fault condition or the second fault condition; and
   resuming operation at the first safety level after repairing either the first fault condition or the second fault condition.

## Claims

1. A method of controlling an industrial control system, the method comprising the steps of:
executing a first control program and a first safety program on a first safety controller, wherein:
the first control program receives a plurality of input signals and generates a plurality of first output signals, and
the first safety program monitors the industrial control system for a first fault condition;
executing a second control program and a second safety program on a second safety controller in tandem with the first safety controller executing the first control program and the first safety program, wherein:
the second control program receives the plurality of input signals and generates a plurality of second output signals,
each of the plurality of second output signals corresponds to one of the plurality of first output signals, and
the second safety program monitors the industrial control system for a second fault condition;
transmitting the plurality of first output signals from the first safety controller to at least one output module;
transmitting the plurality of second output signals from the second safety controller to the at least one output module;
setting each output channel on the at least one output module either to one of the plurality of first output signals or to one of the plurality of second output signals, wherein:
each output channel corresponds to one of the plurality of first and second output signals,
each output channel is set only to one of the corresponding first and second output signals; and
operating at a first safety level while the first safety controller monitors the industrial control system for the first fault condition and the second safety controller monitors the industrial control system for the second fault condition.

2. The method of claim 1, further comprising the steps of:
detecting either the first fault condition with the first safety controller or the second fault condition with the second safety controller; and
operating at a second safety level when either the first or second fault condition is detected, wherein the second safety level is lower than the first safety level.

3. The method of claim 2, at least one of:
further comprising the steps of:
repairing either the first fault condition or the second fault condition which was detected within a mean repair time; and
resuming operation at the first safety level after repairing either the first fault condition or the second fault condition; and
wherein beginning operation at the second safety level further comprises the steps of:
discontinuing execution of the first control program and transmitting the plurality of first output signals when the first safety controller detects the first fault condition;
discontinuing execution of the second control program and transmitting the plurality of second output signals when the second safety controller detects the second fault condition;
setting each output channel on the at least one output module to the plurality of second output signals when the first safety controller detects the first fault condition; and
setting each output channel on the at least one output module to the plurality of first output signals when the second controller detects the second fault condition.

4. The method of one of claims 1 to 3 further comprising the step of establishing a concurrent connection between a first pair of redundant end modules and a second pair of redundant end modules, wherein the first pair of redundant end modules is the first safety controller and the second safety controller and the second pair of redundant end modules is a first output module and a second output module.

5. The method of claim 4 further comprising the steps of:
comparing each of the plurality of first output signals to the corresponding second output signal with at least one of the first safety controller and the second safety controller; and
agreeing on either the plurality of first output signals or the plurality of second output signals to be transmitted from the first and second safety controllers.

6. The method of claim 5 further comprising the steps of:
receiving the plurality of first output signals at the at least one output module; and
receiving the plurality of second output signals at the at least one output module, wherein the step of setting each output channel on the at least one output module uses a first received output signal between the plurality of first output signals and the plurality of second output signals.

7. The method of one of claims 1 to 6, further comprising the steps of:
detecting either the first fault condition with the first safety controller or the second fault condition with the second safety controller;
continuing operation at the first safety level when either the first or second fault condition is detected;
discontinuing execution of the first control program and transmitting the plurality of first output signals when the first safety controller detects the first fault condition;
discontinuing execution of the second control program and transmitting the plurality of second output signals when the second safety controller detects the second fault condition;
setting each output channel on the at least one output module to the plurality of second output signals when the first safety controller detects the first fault condition; and
setting each output channel on the at least one output module to the plurality of first output signals when the second safety controller detects the second fault condition.

8. A method of controlling an industrial control system, the method comprising the steps of:
executing a first safety program on a first safety controller;
executing a second safety program on a second safety controller in tandem with the first safety controller executing the first safety program;
detecting a first fault condition in the industrial control system with the first safety program executing on the first safety controller;
detecting a second fault condition in the industrial control system with the second safety program executing on the second safety controller;
detecting a third fault condition in the industrial control system with either the first safety program executing on the first safety controller or the second safety program executing on the second safety controller;
disabling monitoring for the third fault condition by the first safety controller upon detecting the first fault condition;
disabling monitoring for the third fault condition by the second safety controller upon detecting the second fault condition;
entering a safe operating state for the industrial control system when either the first safety program or the second safety program detects the third fault condition; and
operating at a first safety level while both the first safety controller and the second safety controller monitor the industrial control system for the third fault condition.

9. The method of claim 8, further comprising the step of operating at a second safety level when either the first or second fault condition is detected, wherein the second safety level is lower than the first safety level.

10. The method of claim 9, further comprising the steps of:
repairing either the first fault condition or the second fault condition which was detected within a mean repair time;
enabling monitoring for the third fault condition by both the first safety controller and the second safety controller after repairing either the first fault condition or the second fault condition; and
resuming operation at the first safety level after repairing either the first fault condition or the second fault condition,
preferably further comprising the step of continuing operation at the first safety level when either the first or second fault condition is detected.

11. The method of one of claims 8 to 10, further comprising the step of establishing a concurrent connection between a first pair of redundant end modules and a second pair of redundant end modules, wherein the first pair of redundant end modules is the first safety controller and the second safety controller and the second pair of redundant end modules is another pair of redundant modules in the industrial control system, preferably further comprising the steps of:
communicating data between the first safety controller and the second safety controller for inclusion in a data packet for the concurrent connection;
agreeing on the data to be included in the data packet with the first safety controller and the second safety controller;
generating a first data packet for transmission by the first safety controller, wherein the first data packet includes the data agreed upon; and
generating a second data packet for transmission by the second safety controller, wherein the second data packet includes the data agreed upon, optionally further comprising the steps of:
receiving the first data packet and the second data packet at the other pair of redundant modules;
using the data from a first received data packet with the other pair of redundant modules, wherein the first received data packet is either the first or second data packet with the data agreed upon arriving earliest in time at the other pair of redundant modules; and
discarding a second received data packet at the other pair of redundant modules, wherein the second received data packet is either the first or second data packet with the data agreed upon arriving latest in time at the other pair of redundant modules.

12. A method of controlling an industrial control system, the method comprising the steps of:
executing a first safety program on a first safety controller;
executing a second safety program on a second safety controller in tandem with the first safety controller executing the first safety program;
detecting a first fault condition in the industrial control system with the first safety program executing on the first safety controller;
detecting a second fault condition in the industrial control system with the second safety program executing on the second safety controller;
detecting a third fault condition in the industrial control system with either the first safety program executing on the first safety controller or the second safety program executing on the second safety controller;
disabling monitoring for the third fault condition by the first safety controller upon detecting the first fault condition;
disabling monitoring for the third fault condition by the second safety controller upon detecting the second fault condition;
entering a safe operating state for the industrial control system when either the first safety program or the second safety program detects the third fault condition;
operating at a first safety level while both the first safety controller and the second safety controller monitor the industrial control system for the third fault condition; and
operating at a second safety level when either the first or second fault condition is detected, wherein the second safety level is lower than the first safety level.

13. The method of claim 12 further comprising the step of establishing a concurrent connection between a first pair of redundant end modules and a second pair of redundant end modules, wherein the first pair of redundant end modules is the first safety controller and the second safety controller and the second pair of redundant end modules is another pair of redundant modules in the industrial control system.

14. The method of claim 13 further comprising the steps of:
communicating data between the first safety controller and the second safety controller for inclusion in a data packet for the concurrent connection;
agreeing on the data to be included in the data packet with the first safety controller and the second safety controller;
generating a first data packet for transmission by the first safety controller, wherein the first data packet includes the data agreed upon; and
generating a second data packet for transmission by the second safety controller, wherein the second data packet includes the data agreed upon,
preferably further comprising the steps of:
receiving the first data packet and the second data packet at the other pair of redundant modules;
using the data from a first received data packet with the other pair of redundant modules, wherein the first received data packet is either the first or second data packet with the data agreed upon arriving earliest in time at the other pair of redundant modules; and
discarding a second received data packet at the other pair of redundant modules, wherein the second received data packet is either the first or second data packet with the data agreed upon arriving latest in time at the other pair of redundant modules.

15. The method of one of claims 12 to 14, further comprising the steps of:
repairing either the first fault condition or the second fault condition which was detected within a mean repair time;
enabling monitoring for the third fault condition by both the first safety controller and the second safety controller after repairing either the first fault condition or the second fault condition; and
resuming operation at the first safety level after repairing either the first fault condition or the second fault condition.
